# EUROPEAN PATENT APPLICATION

(11) **EP 1 596 129 A1**
(43) Date of publication of application: **16.11.2005**
(21) Application number: 03768284.6
(22) Date of filing: 26.12.2003
(51) Int. Cl.: F23G 7/00, B60R 21/26, B09B 3/00

(54) **INFLATOR TREATMENT METHOD**

(30) Priority: 17.02.2003 JP 2003037714; 20.03.2003 JP 2003077056
(71) Applicant: DAICEL CHEMICAL INDUSTRIES, LTD., Sakai-shi, Osaka 590-8501 (JP)
(72) Inventor: NAKAZAWA, Yuji, Kako-gun, Hyogo 675-0151 (JP); SUGUMOTO, Tasaaki, Sakai-shi, Osaka 590-0143 (JP); YOSHII, Masao, Ibo-gun, Hyogo 671-1532 (JP)
(74) Representative: Schuster, Thomas
(86) International application number: PCT/JP2003/016852
(87) International publication number: WO 2004/072549

(57) **Abstract**

The present invention provides an inflator treatment method for disposal with which the operation time can be reduced greatly.

Using elevating means 45, a floor portion 15 only is lowered from a thermally treating tower 10 and placed on a carriage 50. The carriage 50 is moved to a position removed from the high-temperature thermally treating tower 10, and in this position, a bucket 40 carrying a treated inflator is replaced by an empty bucket 40.

## Description

### Technical Field of the Invention

The present invention relates to an inflator treatment method for disposal using inflator thermally treating equipment.

### Prior Art

In recent years, the number of new cars equipped with air bags has increased, and hence in the future, the amount of inflators installed with gas generating agents that are produced during disposal of such cars equipped with air bags will rise. Therefore, from the viewpoints of safety and effective utilization of resources, it is necessary to activate the gas generating agent safely to recover metals and the like therefrom. In such circumstances, recovery/disposal systems for air bag inflators have begun to be developed.

To treat an air bag inflator, a method of subjecting the inflator to thermal treatment inside a thermally treating tower and activating the gas generating agent installed in the inflator at a high temperature is applied. The combustion gas generated by treatment of the gas generating agent is discharged through an exhaust gas tube connected to the thermally treating tower.

Following the thermal treatment, the inflator is removed from the thermally treating tower and subjected to metal-recovery processing, but since the interior of the thermally treating tower is at a high temperature, there is danger involved in recovering the treated inflator from the thermally treating tower. While reducing the internal temperature of the thermally treating tower to ambient temperature is beneficial in terms of safety, but since the temperature must be raised again during the subsequent treatment process, this temperature reduction leads to a dramatic decrease in thermal efficiency and an increase in cost.

It is therefore desirable to develop a method of recovering a treated inflator from the interior of a thermally treating tower with no decrease in safety and treatment efficiency.

JP-A No. 11-101422 may be cited as prior art relating to the present invention.

### Summary of the Invention

An object of the present invention is to provide an inflator treatment method for disposal using inflator thermally treating equipment, with which an inflator can be treated safely and efficiently, and valuable resources can be recovered easily from the post-treatment inflator.

As means for achieving this object, an invention of claim 1 provides an inflator treatment method for disposal using inflator thermally treating equipment with which an inflator for an air bag can be subjected to a high-temperature treatment inside a thermally treating tower, the inflator treatment method for disposal comprising the steps of:
introducing the inflator into a bucket placed on a floor portion of the thermally treating tower, and subjecting the inflator to the high-temperature treatment;
lowering an internal temperature of the thermally treating tower following completion of the high-temperature treatment;
lowering only the floor portion of the thermally treating tower, which is separable from a main body thereof and on which the bucket is placed, using elevating means so as to place the floor portion on a carriage;
causing the carriage to travel to a predetermined position; and
removing only the bucket from the carriage, and recovering the treated inflator from the interior of the bucket.

As further means for achieving the object, an invention of claim 2 provides an inflator treatment method for disposal using inflator thermally treating equipment with which an inflator for an air bag can be subjected to a high-temperature treatment inside a thermally treating tower, the inflator treatment method for disposal comprising the steps of:
introducing the inflator into a bucket placed on a floor portion of the thermally treating tower, and subjecting the inflator to the high-temperature treatment;
lowering an internal temperature of the thermally treating tower following completion of the high-temperature treatment;
lowering only the floor portion of the thermally treating tower, which is separable from a main body thereof and on which the bucket is placed, using elevating means so as to place the floor portion on a carriage;
causing the carriage to travel to a predetermined position;
replacing the bucket on the carriage, carrying the treated inflator, with a new bucket;
causing the carriage carrying the floor portion of the thermally treating tower, on which the new bucket is placed, to travel to a position directly beneath the thermally treating tower, using the elevating means to raise the floor portion of the thermally treating tower such that the floor portion is attached to the main body, and resuming the high-temperature treatment inside the thermally treating tower; and
recovering the inflator from the bucket carrying the treated inflator.

The air bag inflator which serves as the treatment subject of the present invention includes all inflators that need to be treated for a variety of reasons, for example defective goods produced during the manufacturing process, returned goods from the automobile maker or module maker, inventory goods that are no longer in production, and inflators removed from discarded vehicles.

According to the inflator treatment method for disposal of the present invention, the operation time can be reduced greatly, and the safety of the operation can be improved.

### Brief Description of the Drawings

Fig. 1 is a schematic diagram of thermally treating equipment to which a treatment method of the present invention is applied;
Fig. 2 is a process diagram illustrating the treatment method of the present invention; and
In Fig. 3, Fig. 3 (a) is a front view of a bucket and Fig. 3(b) is a plan view of a bucket.

### Explanation of Numerals

- 10: thermally treating tower
- 30: inflator
- 40: bucket
- 45: elevating means
- 50: carriage
- 55: rails

### Preferred Embodiments of the Invention

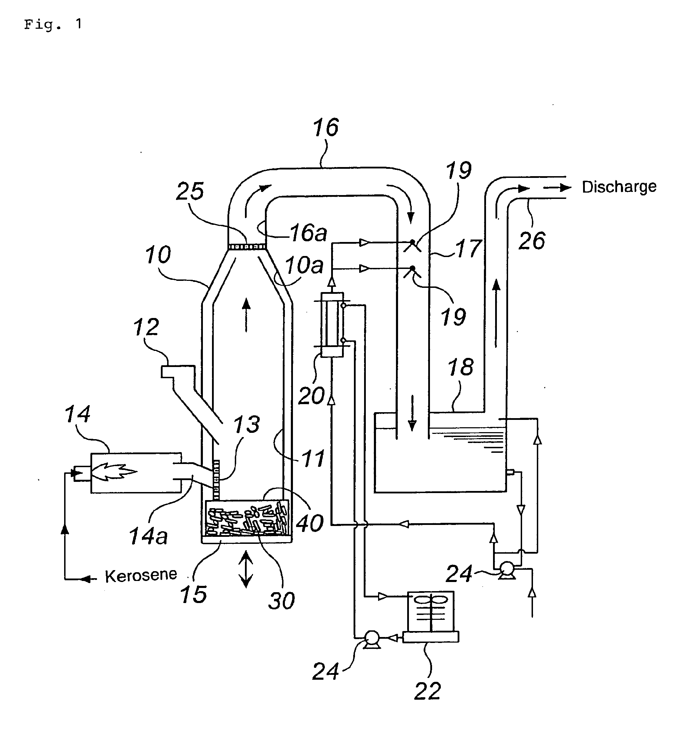

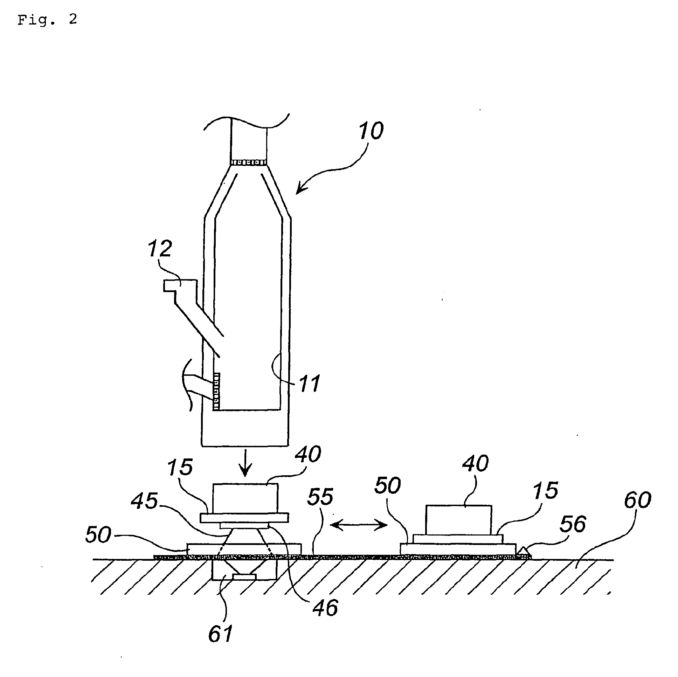

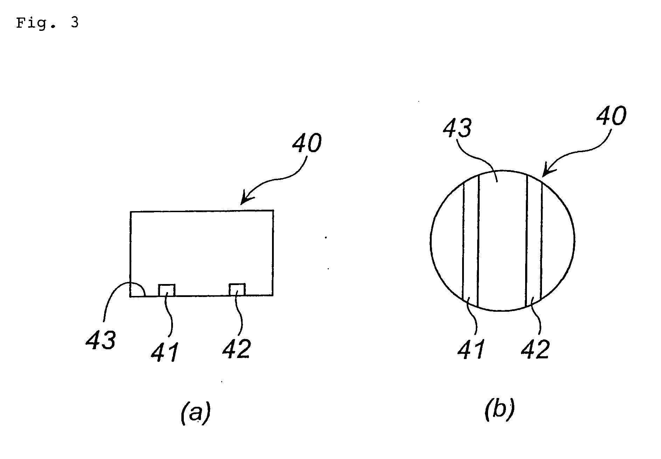

An embodiment of the present invention will now be described with reference to the drawings. Fig. 1 is a schematic diagram of inflator thermally treating equipment comprising a thermally treating tower, Fig. 2 is a process diagram illustrating the treatment method of the present invention, and Fig. 3 (a) and (b) are a front view and a plan view of a bucket, respectively.

First, an inflator 30 is treated to be activated in the interior of a thermally treating tower 10 by subjecting the inflator 30 to high-temperature treatment at a temperature that is equal to or greater than the temperature required to ignite and burn the gas generating agent installed in the inflator 30.

The inflator 30 serving as the treatment subject is introduced through an inflator introducing port 12 into a bucket 40 placed on a floor portion 15 of the thermally treating tower 10. Note that each constitutional component, including the thermally treating tower 10, is supported by a support structure not shown in the drawing.

The bucket 40 is formed to match the inner form of the thermally treating tower 10, and therefore the inner diameter of the thermally treating tower 10 and the outer diameter of the bucket 40 are preferably similar.

Thus the inflator 30 can be prevented from slipping between the inner wall surface of the thermally treating tower 10 and the outer wall surface of the bucket 40. Moreover, damage to the inner wall surface of the thermally treating tower 10 and insufficient heating of the inflator 30 (such that unburned gas generating agent remains in the inflator 30) can be prevented.

As shown in Fig. 3 (a) and (b), the bucket 40 preferably comprises two insertion holes 41, 42 formed in the diametrical direction on a bottom portion 43 thereof to facilitate post-processing.

The bucket 40 can be moved using a forklift, for example, by inserting the two claws of the forklift into the two insertion holes 41, 42, and hence, using the bucket 40 constituted in this manner, the safety of an operation to treat the high-temperature bucket 40 can be increased, leading to improvements in workability and treatment efficiency.

The floor portion 15 of the thermally treating tower 10 is severed from the main body (the thermally treating tower 10 apart from the floor portion 15) so as to be elevatable in a vertical direction. Note, however, that when the floor portion 15 is connected to the main body to form the thermally treating tower 10, the floor portion 15 and main body are connected such that heat cannot escape from the connecting part.

When the inflator 30 is introduced, the interior of the thermally treating tower 10 is maintained at a predetermined temperature (the ignition temperature of the gas generating agent installed in the inflator 30) by a combustion furnace 14 (burner) annexed to the thermally treating tower 10. Note that kerosene is supplied to the combustion furnace (a combination of a high-calorie burner and a low-calorie burner, for example) 14 as a fuel.

The temperature at which the gas generating agent burns is equal to or greater than the ignition temperature of the gas generating agent, and this ignition temperature differs according to the composition of the gas generating agent. The ignition temperature of a typical gas generating agent is approximately 150 to 500°C, but at excessively high temperatures, the inner wall of the thermally treating tower 10 may be damaged, and therefore the internal temperature of the thermally treating tower 10 is preferably in the range of 150 to 800°C, and more preferably in the range of 150 to 700°C.

The gas generated by treatment of the inflator 30 (the combustion gas of the gas generating agent) is discharged through an exhaust gas tube 16 provided on an upper opening portion side of the thermally treating tower 10.

The tip end of the exhaust gas tube 16 is connected to a cooling tower tank 18. Hence, gas passing through the interior of the exhaust gas tube 16 is cooled in a cooling tower 17 by a water spray produced by a cooling shower 19, and then led into water inside the cooling tower tank 18. The gas that accumulates in the cooling tower tank 18 is discharged into the atmosphere through a gas discharge tube 26. The reference numerals 20, 22, and 24 denote a heat exchanger, a cooler, and a pump, respectively. Note that a metal partition wall 11, which exhibits the same action as a device disclosed in Fig. 1 and so on of JP-A No. 11-101422, may be provided inside the thermally treating tower 10.

When the inflator 30 is treated to be activated, the gas pressure generated by combustion of the gas generating agent may propel the inflator 30 such that the inflator 30 flies into the exhaust gas tube 16 and causes damage thereto. To prevent the propelled inflator 30 from flying into the exhaust gas tube 16, partition means 25 through which gas can flow are provided between the thermally treating tower 10 and exhaust gas tube 16.

The partition means 25 are attached removably using a bolt and nut in a flange portion provided on an inner wall surface 10a of the thermally treating tower 10 or an inner wall surface 16a of the exhaust gas tube 16.

The partition means 25 may employ wire mesh having a large number of holes, punched metal, a metal grating (an iron grating or the like), or a similar device. The size of the holes provided in the partition means 25 is set so that gas can pass through, but the inflator 30 or pieces of the broken inflator 30 cannot pass through.

There are no particular limitations on the size of the holes, and when the holes are circular, the diameter thereof is preferably not more than 150mm, more preferably not more than 100mm, and even more preferably no more than 20mm. When the holes take another form such as a square form, the length of one side of the holes should be adjusted such that the holes have a similar opening area to that of the circular holes.

The material of the partition means 25 is preferably selected in consideration of durability in relation to the internal temperature of the thermally treating tower 10, strength to withstand collisions with the inflator 30 over long-term usage, and so on. For example, stainless steel, iron, or a similar material may be used.

The partition means 25 may be provided singly, or in a combination of two or more. When two or more partition means are used in combination, the two or more means are preferably disposed with a gap therebetween.

Further, partition means 13 are attached removably to the combustion furnace 14 for the same purpose as the partition means 25. The partition means 13 may be attached to the combustion furnace 14 in any positions between the combustion furnace 14 and the interior of the thermally treating tower, for example at the opening part of a heated gas outlet duct 14a of the combustion furnace 14, as shown in Fig. 1, or in another position such as the interior of the heated gas outlet duct 14a of the combustion furnace 14.

Once the high-temperature treatment of the inflator 30 is complete, the internal temperature of the thermally treating tower 10 is reduced.

Immediately after completion of the high-temperature treatment, the internal temperature of the thermally treating tower 10 is approximately 450 to 700°C, for example, and it is therefore extremely dangerous to begin removing the inflator 30 immediately. Hence the internal temperature of the thermally treating tower 10 should be reduced. However, an excessively large amount of time is required to reduce the internal temperature of the thermally treating tower 10 to the vicinity of room temperature, which leads to a decrease in treatment efficiency.

Hence, in consideration of both operational safety and treatment efficiency, coupled with the fact that operational safety is high when the treatment method of the present invention is applied, the internal temperature of the thermally treating tower 10 is preferably reduced to 400°C or less, and more preferably between 250 and 400°C in the present invention.

Next, as shown in Fig. 2, only the floor portion 15 of the thermally treating tower 10, which is separable from the main body and on which the bucket 40 is placed, is lowered onto a carriage 50 using elevating means 45.

The carriage 50 takes the form of a square frame such that the four sides of the frame are able to support the floor portion 15 on which the bucket 40 is placed. Note that since the floor portion 15 is still at a high temperature, the carriage 50 is formed from a material that can withstand this high temperature.

Two rails 55 are laid on a base surface (the disposition surface of the thermally treating tower 10 and so on) 60, and the carriage 50 is provided with wheels which mesh with the rails 55 such that the carriage 50 is capable of movement in a front-back direction (the direction indicated by the double-headed arrow) along the two rails 55 by means of electric power.

One end side of the elevating means 45 supports the floor portion 15 on a planar support surface (top plate) 46 thereof, and the other end side is fixed inside a recessed portion space 61 (shown in cross-section in Fig. 2) provided in the base surface 60 within the carriage 50 (within the frame forming the carriage). When the elevating means 45 are elevated to a maximum limit, the floor portion 15 is joined perfectly to the main body of the thermally treating tower 10, and when the elevating means 45 are lowered to a maximum limit, the floor portion 15 is separated automatically from the support surface 46 and placed within the frame of the carriage 50. Further, when the elevating means 45 are lowered to the maximum limit, the elevating means 45 are accommodated completely within the recessed portion space 61 provided in the base surface 60, and therefore do not obstruct movement of the carriage 50.

As regards the joining method of the main body and floor portion 15 of the thermally treating tower 10, any method may be applied as long as the main body and floor portion 15 can be joined perfectly and the efficiency of the high-temperature treatment inside the thermally treating tower 10 is not affected adversely. For example, a method may be applied whereby a flange is provided on the opening portion of the main body of the thermally treating tower 10 (the opening portion which appears when the floor portion 15 is lowered), and another flange which corresponds to this flange in both form and size is provided on the outer peripheral edge of the floor portion 15. Then, when the flange on the main body of the thermally treating tower 10 and the flange on the floor portion 15 have been joined perfectly, the joint part is fastened by a plurality of clamps attached to the floor portion 15. When such a joining method is applied, an operation to unfasten the clamps should be performed to lower the floor portion 15.

Next, with the floor portion 15 placed on the carriage 50 and the bucket 40 placed on the floor portion 15, the carriage 50 is caused to travel to a predetermined position. The carriage 50 preferably comprises an electric driving device (motor) so that the carriage 50 can travel automatically in accordance with an operation or the like performed by an operator.

There are no particular limitations on means for stopping the carriage 50 in the predetermined position. For example, means may be applied whereby a carriage stopping switch (a proximity switch, for example) is buried in the predetermined position within the base surface 60 such that when the carriage 50 reaches the point at which the carriage stopping switch is buried, current supply to the driving device for the carriage 50 is halted, thereby halting the carriage 50 automatically. To ensure the safety of the operator, the predetermined position is preferably set at a sufficient distance from the thermally treating tower 10 so that the operator is not affected adversely by the heat of the thermally treating tower 10.

By moving the carriage 50 in this manner, the inflator 30 can be recovered at a remove from the high-temperature thermally treating tower 10, and hence the safety of the operation is ensured. Moreover, since the heat of the thermally treating tower 10 is unlikely to have an effect, the time required to reduce the temperature inside the thermally treating tower 10 can be shortened. In other words, the heat reduction span can be reduced, and hence the treatment time can be shortened.

Next, with the floor portion 15 remaining on the carriage 50, the bucket 40 alone is moved, and the treated inflator 30 is recovered from the interior of the bucket 40.

The temperature of the bucket 40 is still high, and therefore a forklift is used by inserting the two claws of the forklift into the insertion holes 41, 42 of the bucket 40, raising the bucket 40 from the floor portion 15, and then recovering the inflator 30.

By employing the bucket 40 having the constitution shown in Fig. 3, the efficiency of this process is greatly improved. Moreover, since the inflator 30 can be recovered at a remove from the thermally treating tower 10, a sufficient operating space can be secured for the forklift, thereby preventing damage to peripheral equipment.

In this process, the bucket 40, from which the inflator 30 has been recovered, may be returned to the floor portion 15 as is, or in order to increase the treatment efficiency, the bucket 40 carrying the treated inflator 30 may be replaced with a new, empty bucket 40.

Next, the carriage 50 on which the floor portion 15 is placed, the floor portion 15 carrying the bucket 40 from which the treated inflator 30 has been recovered (or the new, empty bucket 40), is caused to travel to a position directly beneath the thermally treating tower 10. Then, the elevating means 45 are used to raise the floor portion 15 to its maximum limit such that the floor portion 15 is attached to the main body of the thermally treating tower 10. The inflator 30 is then introduced into the bucket 40 through the inflator introducing port 12, whereupon the high-temperature treatment inside the thermally treating tower 10 is resumed.

The recovered inflator 30 is passed to a process for recovering and reusing valuable resources, where the metals forming the outer shell and so on of the inflator 30 are recovered according to metal type and reused.

### Example

The present invention will now be described in more detail on the basis of an example. However, the present invention is not limited to or by this example.

### Example 1

High-temperature treatment process

The thermally treating equipment shown in Fig. 1 was used. First, a wire harness connected to the igniter of the inflator was removed as preliminary treatment. When the wire harness is connected directly to the inflator, the wire harness is cut at its root by scissors or nippers, and when the wire harness is connected to the inflator via a connector, the connector is extracted using an extraction jig. Simultaneously, plastic components were also removed.

Next, recovered inflators were separated into forms and the main metals (aluminum, iron, stainless steel) constituting the outer shell container thereof.

Next, among the separated inflators, an inflator for a driving side (having a disk form with a diameter of approximately 70mm and a thickness of approximately 28mm; the housing thereof is formed from stainless steel with a melting point between 1450 and 1650°C; the inflator contains 40g of gas generating agent with an ignition temperature of 223°C) was subjected to high-temperature treatment in the following manner.

The combustion furnace 14 was operated, whereby the internal temperature of the thermally treating tower 10 was raised in advance to, and maintained at, approximately 510°C. In this temperature atmosphere, twenty inflators 30 were introduced into the bucket 40 (as shown in Fig. 3, having the form of a bottomed cylinder with the outer diameter of 1.518m; manufactured in SUS304 by Kawakami Tekkou K.K.) of the thermally treating tower 10 (inner diameter 1.56m) through the inflator introducing port 12. Following introduction of the inflators 30, the internal temperature of the thermally treating tower 10 was maintained at 510°C for approximately 20 to 25 minutes.

The gas generating agent in the inflators 30 was ignited and burned, and the gas produced by this combustion was discharged to the cooling tower 17 through the exhaust gas tube 16. The gas was cooled by a water spray produced by the cooling shower 19, and then led into the water inside the cooling tower tank 18. The accumulated gas inside the cooling tower tank 18 was discharged into the atmosphere through the gas discharge tube 26. The temperature of the gas at the time of discharge was approximately 50°C.

When the gas inside the exhaust gas tube 16 was extracted and measured, the dioxin concentration thereof was found to be no more than 0.25ng-TEQ/Nm³. Analysis was performed in accordance with the "Dioxins Measurement Manual In Waste Matter Treatment", prepared by the Waste Management Section of the Water Supply and Environmental Sanitation Department in the Environmental Health Bureau of the Japanese Ministry of Health and Welfare.

### Cooling process

The thermally treating tower 10 was left to stand for twelve minutes with heating by the combustion furnace 14 halted, whereby the internal temperature of the thermally treating tower 10 fell from 510°C to 390°C.

### Process for lowering floor portion of thermally treating tower

The elevating means 45 were lowered by the maximum limit (approximately 1.1m) such that the floor portion 15 carrying the bucket 40 was placed on the carriage 50 (made of steel (by Suehiro Industries Ltd.) and taking a rectangular frame shape with a short side of 2.5m, a long side of 3m, and a height of 0.34m).

### Process for moving carriage

The carriage 50 was caused to travel automatically along the two rails 55, and halted in a position (removed from the thermally treating tower 10 by a distance of approximately 4m) at which the safety of the operator could be ensured.

### Bucket replacement process

The bucket 40 (shown in Fig. 3) containing the treated inflators 30 and still at a high temperature was lifted up from the floor portion 15 using one forklift, and a new bucket 40 was placed on the floor portion 15 using another forklift.

### Process for attaching floor portion and bucket to thermally treating tower

The carriage 50 was caused to travel automatically, and halted directly beneath the thermally treating tower 10. The elevating means 45 were then raised to their maximum limit such that the floor portion 15 carrying the empty bucket 40 was fitted perfectly into the main body of the thermally treating tower 10. The high-temperature treatment process was then resumed.

The time required to attach the floor portion 15 to the main body of the thermally treating tower 10 following completion of the cooling process was approximately five minutes, and the time required to raise the internal temperature of the thermally treating tower 10 to 460°C in order to resume the high-temperature treatment was eight minutes. Hence, the total amount of time required from the end of high-temperature treatment to the resumption of high-temperature treatment was found to be 12min+5min+8min=25min.

When the process of moving the carriage was not performed, a large amount of time was required to perform the cooling process in order to ensure the safety of the operator, and hence the total amount of time required from the end of high-temperature treatment to the resumption of high-temperature treatment was found to be approximately ninety minutes.

## Claims

1. An inflator treatment method for disposal using inflator thermally treating equipment with which an inflator for an air bag can be subjected to a high-temperature treatment inside a thermally treating tower, the inflator treatment method for disposal comprising the steps of:
introducing the inflator into a bucket placed on a floor portion of the thermally treating tower, and subjecting the inflator to the high-temperature treatment;
lowering an internal temperature of the thermally treating tower following completion of the high-temperature treatment;
lowering only the floor portion of the thermally treating tower, which is separable from a main body thereof and on which the bucket is placed, using elevating means so as to place the floor portion on a carriage;
causing the carriage to travel to a predetermined position; and
removing only the bucket from the carriage, and recovering the treated inflator from the interior of the bucket.

2. An inflator treatment method for disposal using inflator thermally treating equipment with which an inflator for an air bag can be subjected to a high-temperature treatment inside a thermally treating tower, the inflator treatment method for disposal comprising the steps of:
introducing the inflator into a bucket placed on a floor portion of the thermally treating tower, and subjecting the inflator to the high-temperature treatment;
lowering an internal temperature of the thermally treating tower following completion of the high-temperature treatment;
lowering only the floor portion of the thermally treating tower, which is separable from a main body thereof and on which the bucket is placed, using elevating means so as to place the floor portion on a carriage;
causing the carriage to travel to a predetermined position;
replacing the bucket on the carriage, carrying the treated inflator, with a new bucket;
causing the carriage carrying the floor portion of the thermally treating tower, on which the new bucket is placed, to travel to a position directly beneath the thermally treating tower, using the elevating means to raise the floor portion of the thermally treating tower such that the floor portion is attached to the main body, and resuming the high-temperature treatment inside the thermally treating tower; and
recovering the inflator from the bucket carrying the treated inflator.

3. The inflator treatment method for disposal according to claim 1 or 2, wherein the bucket has a similar outer diameter to the inner diameter of the thermally treating tower.

4. The inflator treatment method for disposal according to any one of claims 1 to 3, wherein the bucket has two insertion holes formed in a bottom portion thereof in a diametrical direction.

5. The inflator treatment method for disposal according to any one of claims 1 to 4, wherein, following completion of the high-temperature treatment, the internal temperature of the thermally treating tower is lowered to not more than 400°C.
